# FASCICULE DE BREVET EUROPEEN

(11) **EP 1 518 783 B1**
(45) Date de publication et mention de la délivrance du brevet: **05.12.2007**
(21) Numéro de dépôt: 04292259.1
(22) Date de dépôt: 21.09.2004
(51) Int. Cl.: B62D 65/00

(54) **Châssis d'un poste de montage de pare-chocs de véhicules automobiles et poste de montage de pare-chocs de véhicules automobiles**
Rahmen für einen Arbeitsplatz für den Zusammenbau eines Stossfängers, und Arbeitsplatz für den Zusammenbau von Stossfängern
Frame for a mounting stand for vehicle bumpers, and mounting stand for vehicle bumpers

(30) Priorité: 26.09.2003 FR 0311300
(43) Date de publication de la demande: 30.03.2005
(73) Titulaire: COMPAGNIE PLASTIC OMNIUM, 69007 Lyon (FR)
(72) Inventeur: Duponnois, Philippe, 52200 Langres (FR); Virelizier, François, 38300 Bourgoin Jallieu (FR); Verwaerde, Marc, 38460 Panossas (FR)
(74) Mandataire: Remy, Vincent Noel Paul

(56) Documents cités:
- WO-A-97/36712
- US-A- 5 662 315
- US-B1- 6 409 128

## Description

La présente invention concerne un châssis d'un poste de montage de pare-chocs de véhicules automobiles et un poste de montage de pare-chocs de véhicules automobiles.

Ce type de poste de montage est utilisé dans les magasins avancés de fabrication pour assembler différentes pièces fonctionnelles sur des pare-chocs. Parmi ces pièces fonctionnelles, on trouve des optiques, des radars de positionnement, des lave-projecteurs, des emblèmes ou encore des convergents.

Plus précisément, l'invention concerne un châssis d'un poste de montage de pare-chocs de véhicule automobile, du type apte à recevoir un support amovible pour un pare-chocs, ce support comportant deux branches latérales fixées de façon amovible respectivement à deux structures d'accueil du châssis.

On connaît déjà dans l'état de la technique un châssis du type précité. Ce type de châssis permet de recevoir des supports adaptés à des pare-chocs de dimensions différentes. Cependant la longueur des ces supports est toujours égale à la distance entre les deux structures d'accueil du châssis, quelle que soit la longueur du pare-chocs.

Les dimensions du châssis sont donc imposées par la longueur du pare-chocs le plus grand que l'on souhaite monter sur ce châssis.

Les châssis de ces postes de montage ont une grande surface au sol alors que la surface des magasins avancés de fabrication est généralement limitée. Par conséquent, lorsqu'un magasin avancé de fabrication est agencé pour fabriquer des pare-chocs de petites dimensions, les châssis du type précité provoquent une perte de place importante.

Un exemple de cette technique antérieure est divulgué par le document WO 9736712.

L'invention a pour but de remédier à ces inconvénients en fournissant un châssis d'un poste de montage de pare-chocs de véhicules automobiles dont la surface au sol n'est pas imposée par les dimensions du pare-chocs le plus grand que l'on souhaite monter et varie en fonction du pare-choc à monter.

A cet effet, l'invention a pour objet un châssis d'un poste de montage de pare-chocs de véhicules automobiles du type précité, caractérisé en ce qu'il comporte des moyens de réglage de la distance entre les deux structures d'accueil de manière à pouvoir s'adapter à des supports de largeurs différentes.

Ainsi, en fonction des dimensions du pare-chocs à monter, le poste de montage reçoit un support plus ou moins long. La distance entre les structures d'accueil du châssis est réglable pour que le châssis puisse s'adapter au support. Par exemple, lorsque le poste de montage est utilisé pour monter des pare-chocs de petites dimensions, les structures d'accueil du châssis sont proches et le châssis occupe une surface au sol plus petite, sous réserve bien entendu que le châssis ne comporte aucune pièce plus externe que les structures d'accueil.

De façon optionnelle, un châssis d'un poste de montage selon l'invention peut comporter :
- un logement central destiné à accueillir un magasin d'approvisionnement,
- deux logements latéraux alignés avec le logement central aptes à accueillir les crosses d'un pare-chocs porté par le support.

Cette caractéristique permet de rapprocher le support du châssis. Cela permet donc à l'utilisateur d'être plus proche du magasin d'approvisionnement. L'utilisateur a ainsi moins d'efforts à fournir pour attraper les pièces détachées.

En effet, les deux logements latéraux peuvent accueillir les crosses du pare-chocs qui contourne ainsi le logement central ce qui n'était pas possible avec les châssis des postes de montage de l'état de la technique.

De façon optionnelle, le châssis peut comporter une liaison rotative d'axe horizontal pour la fixation d'une branche latérale du support à une structure d'accueil du châssis ou peut comporter une liaison encastrement pour la fixation d'une branche latérale du support à une structure d'accueil du châssis.

Le châssis présente donc l'avantage d'être modulable et de pouvoir recevoir un support rotatif ou un support fixe. Le magasin avancé de fabrication n'a donc pas besoin de stocker deux jeux de châssis dont l'un reste inutilisé lorsque l'autre est en service. Le châssis de l'invention permet donc des économies de coût et de surface.

Un châssis d'un poste de montage de pare-chocs selon l'invention peut en outre comporter l'une ou plusieurs des caractéristiques suivantes :
- les structures d'accueil du châssis sont disposées de manière à ce que la distance les séparant est inférieure à la longueur du support,
- le logement central comporte sur la face du châssis opposée au support, une ouverture permettant l'insertion d'un magasin d'approvisionnement.

L'invention a également pour objet un poste de montage de pare-chocs de véhicule automobile caractérisé en ce qu'il comprend un châssis selon l'invention précédemment décrite et un support amovible pour pare-chocs.

L'invention sera mieux comprise à la lecture de la description qui va suivre, donnée uniquement à titre d'exemple et faite en se référant aux dessins dans lesquels :
- la figure 1 est un schéma en perspective d'un poste de montage muni d'un châssis selon l'invention,
- la figure 2 est un schéma vu du dessus d'un poste de montage muni d'un châssis selon l'invention,
- la figure 3 est un schéma similaire à la figure 2 selon un autre mode de fonctionnement,
- la figure 4 est un schéma en perspective d'un poste de montage de l'invention selon un autre mode de fonctionnement.

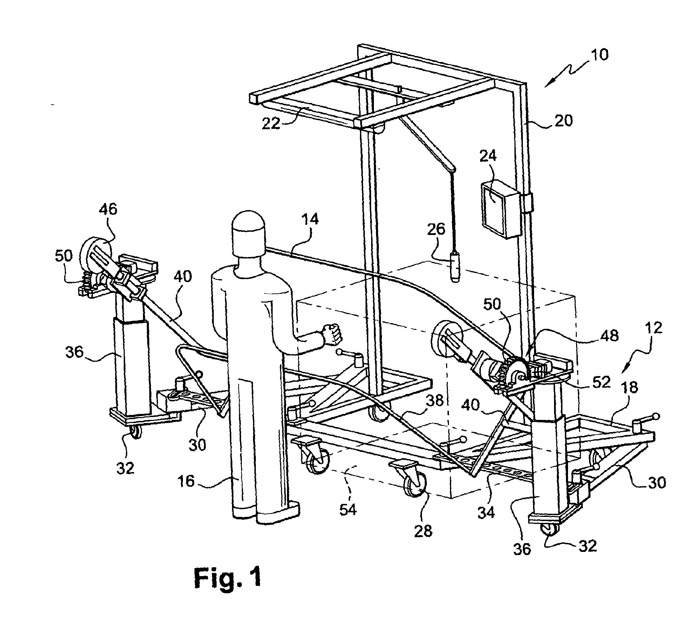

Un poste de montage de pare-chocs de véhicules automobiles désigné par la référence générale 10 est représenté sur la figure 1. Ce poste de montage 10 est composé d'un châssis 12 apte à recevoir un support 14 amovible pour un pare-chocs. Ce poste de montage 10 est destiné à être utilisé par un opérateur 16 debout.

Le châssis 12 est constitué par un assemblage de poutres métalliques. Il comporte une structure horizontale inférieure 18 sur laquelle est fixée une structure supérieure 20 destinée à supporter divers éléments fonctionnels comme un éclairage 22, un écran de contrôle 24 ou des outils pneumatiques 26.

Le châssis 12 est monté sur des roulettes 28 ce qui permet de le déplacer facilement lors d'une restructuration d'un magasin avancé de fabrication.

Le châssis 12 comporte en outre deux bras 30 horizontaux fixés à la structure horizontale inférieure 18 par une liaison pivot d'axe vertical. Les extrémités des bras 30 opposées à la liaison comportent des roulettes 32 disposées perpendiculairement à la direction des bras 30 pour faciliter leur rotation.

Le châssis 12 comporte des moyens de réglage 34 de l'angle formé entre les bras 30 et !a structure horizontale inférieure 18.

Deux structures d'accueil 36 du support amovible 14 pour pare-chocs sont respectivement fixées sur chacun des deux bras 30, en leur extrémité opposée à la liaison pivot. Ces structures d'accueil 36 sont constituées par des montants 36 verticaux.

Les extrémités supérieures de chaque montant 36 vertical sont munies de moyens d'accrochage amovible du support 14 pour pare-chocs.

Les moyens de réglage 34 de l'angle formé entre les bras et la structure horizontale inférieure constituent des moyens de réglage 34 de la distance entre les montants 36 verticaux. Ces moyens de réglage 34 de la distance entre les montants 36 permettent d'adapter le châssis 12 à des supports 14 de largeurs différentes.

Le support 14 est constitué par une structure centrale 38 destinée à recevoir le pare-chocs et par deux branches 40 latérales permettant la fixation du support 14 aux montants 36 verticaux du châssis 12.

La structure centrale 38 du support 14 est munie de capteurs (non-représentés) reliés à un dispositif de traitement. Ces capteurs permettent de vérifier que les opérations à effectuer sur le pare-chocs ont été correctement réalisées par l'opérateur. Les informations des capteurs sont alors affichées sur l'écran de contrôle 24.

Les moyens de réglage 34 de l'angle formé entre un bras 30 et la structure horizontale inférieure 18 du châssis 12 sont constitués par une tringle 34 perforée horizontale.

La première extrémité de cette tringle 34 perforée est fixée à la structure horizontale inférieure 18 à l'aide d'une goupille 42 insérée dans une des perforations, cette perforation étant choisie en fonction de l'angle voulu.

La seconde extrémité de la tringle 34 perforée est fixée au bras 30 à l'aide d'une goupille 42 insérée dans une fente 44 ménagée dans cette tringle 34 perforée. Cette fente 44, qui s'étend perpendiculairement à la tringle 34 perforée permet de compenser le déplacement de l'extrémité du bras 30 engendré par sa rotation, et permet donc à la tringle 34 perforée de garder en permanence la même direction. Elle permet également des réglages fins de la distance entre les deux montants 36.

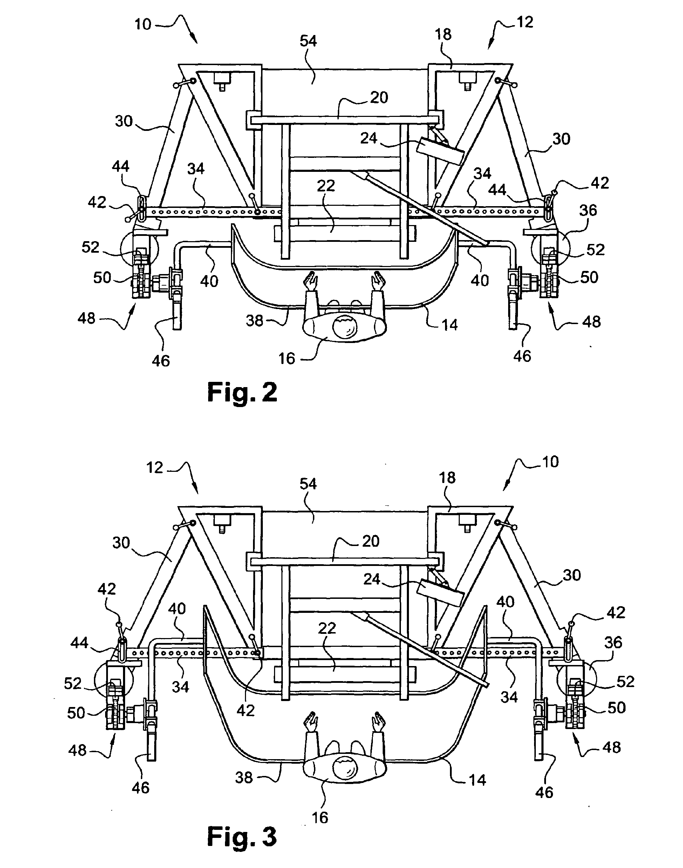

Deux configurations du châssis 12 sont représentées sur les figures 2 et 3. Sur la figure 2, le châssis reçoit un support 14 pour pare-chocs de petites dimensions. Les montants 36 verticaux sont donc proches et les tringles 34 perforées ne sont pas utilisées sur toute leur longueur. Sur la figure 3, le châssis 12 reçoit un support 14 pour pare-chocs de grandes dimensions. La distance entre les montants 36 verticaux est donc plus grande que sur la figure 2 et les tringles 34 perforées sont utilisées sur toute leur longueur, c'est à dire que les goupilles 42 sont placées dans les perforations situées aux extrémités des tringles 34 perforées.

Le châssis 12 de l'invention peut être utilisé avec un support 14 fixe ou avec un support 14 mobile.

Selon un premier mode de fonctionnement représenté sur la figure 1, le support 14 est mobile autour d'un axe horizontal passant par les extrémités supérieures des deux montants 36 verticaux.

Chaque montant 36 vertical comporte alors une liaison rotative d'axe horizontal pour la fixation d'une branche 40 latérale du support 14 à un montant 36 vertical du châssis 12. Grâce à cette liaison, le support 14 peut tourner autour d'un axe horizontal ce qui permet à l'opérateur d'accéder à tous les cotés du pare-chocs.

Pour que l'opérateur puisse faire tourner le support 14 sans fournir trop d'efforts, chacune de ses branches 40 latérales comporte un contrepoids 46 qui compense le poids de sa structure centrale 38 et du pare-chocs.

Pour fixer le support 14 dans une position voulue, les montants 36 du châssis comportent des freins 48. Ces freins 48 sont constitués par deux roues dentées 50 solidaires en rotation du support et par deux crémaillères 52 liées aux montants 36. L'immobilisation du support 14 est réalisée par l'engrènement des crémaillères 52 dans les dents des roues dentées 50.

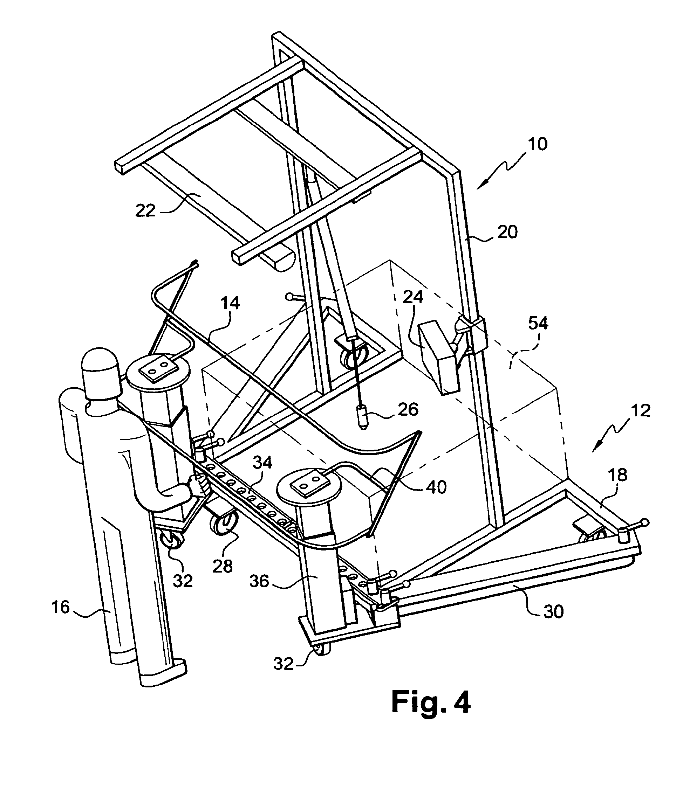

Selon un deuxième mode de fonctionnement représenté sur la figure 4, le support 14 est fixe. Le support 14 fixe utilisé est différent du support 14 mobile du premier mode de fonctionnement : les branches latérales 40 sont orientées vers l'intérieur du support 14.

Dans cette configuration, les bras 30 sont positionnés contre le châssis 12 et chaque montant 36 comporte une liaison encastrement pour la fixation d'une branche latérale 40 du support 14 à un montant 36 du châssis 12.

La longueur du support 14 de pare-chocs utilisé est alors supérieure à la distance entre les deux montants 36 du châssis. Cette configuration présente l'avantage de minimiser la surface au sol occupée par le poste de montage 10.

En variante non représentée, le support utilisé dans ce deuxième mode de fonctionnement peut-être une table, ayant la forme du pare-chocs, fixée au châssis. Cette table peut par exemple être en résine moulée.

Dans ces deux configurations, le châssis 12 comporte un logement central destiné à accueillir un magasin d'approvisionnement 54 et deux logements latéraux alignés avec le logement central, ces logements latéraux étant aptes à accueillir les crosses du pare-chocs porté par le support.

Cette configuration permet de rapprocher les approvisionnements de l'opérateur.

Le châssis est également conçu pour que le logement central comporte, sur la face du châssis opposée au support, une ouverture permettant l'insertion d'un magasin d'approvisionnement 54.

Ce logement central permet d'utiliser indifféremment des magasins d'approvisionnement 54 sous forme de palettes ou sous forme d'approvisionnements inclinés.

## Revendications

1. Châssis (12) d'un poste de montage (10) de pare-chocs de véhicules automobiles, apte à recevoir un support (14) amovible pour un pare-chocs, ce support (14) comportant deux branches latérales (40) fixées de façon amovible respectivement à deux structures d'accueil (36) du châssis (12), **caractérisé en ce qu**'il comporte des moyens de réglage (34) de la distance entre les structures d'accueil (36) de manière à pouvoir s'adapter à des supports (14) de largeurs différentes.

2. Châssis selon la revendication 1, comportant une liaison rotative d'axe horizontal pour la fixation d'une branche latérale (40) du support (14) à une structure d'accueil (36) du châssis.

3. Châssis selon la revendication 1, comportant une liaison encastrement pour la fixation d'une branche latérale (40) du support (14) à une structure d'accueil (36) du châssis.

4. Châssis selon l'une des revendications précédentes, dans lequel les structures d'accueil (36) du châssis sont disposées de manière à ce que la distance les séparant est inférieure à la longueur du support (14).

5. Châssis selon l'une des revendications précédentes, comportant :
- un logement central destiné à accueillir un magasin d'approvisionnement (54),
- deux logements latéraux alignés avec le logement central aptes à accueillir les crosses d'un pare-chocs porté par le support.

6. Châssis selon la revendication 4, dans lequel le logement central comporte, sur la face du châssis opposée au support, une ouverture permettant l'insertion d'un magasin d'approvisionnement (54).

7. Poste de montage (10) de pare-chocs de véhicules automobiles **caractérisé en ce qu**'il comprend un châssis (12) selon l'une des revendications 1 à 6 et un support (14) amovible pour un pare-chocs.

## Claims

1. A frame (12) for a stand (10) for mounting motor vehicle bumpers, the frame being suitable for releasably receiving a bumper support (14), the support (14) having two side branches (40) releasably secured respectively to two receiver structures (36) of the frame (12), the frame being **characterized in that** it includes means (34) for adjusting the distance between the receiver structures (36) so as to be capable of adapting to supports (14) of different widths.

2. A frame according to claim 1, including a horizontal-axis rotary connection for fastening a side branch (40) of the support (14) to a receiver structure (36) of the frame.

3. A frame according to claim 1, including an interfitting connection for fastening a side branch (40) of the support (14) to a receiver structure (36) of the frame.

4. A frame according to any preceding claim, in which the receiver structures (36) of the frame are disposed in such a manner that the distance between them is shorter than the length of the support (14).

5. A frame according to any preceding claim, including:
· a central housing for receiving a supply magazine (54); and
· two side housings in alignment with the central housing and suitable for receiving the overriders of a bumper carried by the support.

6. A frame according to claim 4, in which the central housing includes, in the face of the frame opposite from the support, an opening enabling a supply magazine (54) to be inserted.

7. A stand (10) for mounting motor vehicle bumpers, **characterized in that** it comprises a frame (12) according to any one of claims 1 to 6 and a removable bumper support (14).

## Patentansprüche

1. Chassis (12) einer Montage-Station (10) für Kraftfahrzeug-Stoßfänger, das geeignet ist, eine lösbare Halterung (14) für einen Stoßfänger aufzunehmen, wobei diese Halterung (14) zwei seitliche Schenkel (40) aufweist, die jeweils lösbar an zwei Aufnahmestrukturen (36) des Chassis (12) befestigt sind, **dadurch gekennzeichnet, dass** es Mittel (34) zum Einstellen des Abstandes zwischen den Aufnahmestrukturen (36) dergestalt aufweist, dass diese sich an Halterungen (14) von unterschiedlicher Breite anpassen können.

2. Chassis nach Anspruch 1, das eine drehbare Verbindung mit einer horizontalen Achse für die Befestigung eines seitlichen Schenkels (40) der Halterung (14) an einer Aufnahmestruktur (36) des Chassis aufweist.

3. Chassis nach Anspruch 1, das eine klemmbare Verbindung für die Befestigung eines seitlichen Schenkels (40) der Halterung (14) an einer Aufnahmestruktur (36) des Chassis aufweist.

4. Chassis nach einem der vorhergehenden Ansprüche, wobei die Aufnahmestrukturen (36) des Chassis so angeordnet sind, dass ihr Abstand voneinander geringer als die Länge der Halterung (14) ist.

5. Chassis nach dem vorangehenden Anspruch, das Folgendes aufweist:
- einen zentralen ummantelten Raum zur Aufnahme eines Materialzufuhr-Magazins (54)
- zwei seitliche Ablageflächen, die auf den zentralen ummantelten Raum ausgerichtet und in der Lage sind, die Traverse eines von der Halterung getragenen Stoßfängers aufzunehmen.

6. Chassis nach Anspruch 4, bei dem der zentrale ummantelte Raum auf der Oberfläche des Chassis, die der Halterung abgewandt ist, eine Öffnung aufweist, die das Einschieben eines Materialzufuhr-Magazins (54) erlaubt.

7. Montage-Station (10) für Kraftfahrzeug-Stoßfänger, **dadurch gekennzeichnet, dass** sie ein Chassis nach einem der Ansprüche 1 bis 6 und eine lösbare Halterung für einen Stoßfänger umfasst.
